# EUROPÄISCHE PATENTSCHRIFT

(11) **EP 1 522 377 B1**
(45) Veröffentlichungstag und Bekanntmachung des Hinweises auf die Patenterteilung: **30.05.2007**
(21) Anmeldenummer: 04104928.9
(22) Anmeldetag: 08.10.2004
(51) Int. Cl.: B23Q 1/00, B23Q 17/00, B23Q 7/14, H04B 5/00, G08C 17/00, B23Q 15/00

(54) **Vorrichtung zum Positionieren eines Werkstückes mit kontaktlosen Energie- und Informationsübertragungsmitteln**
Device for positioning a workpiece with contact-free energy and information transmission means
Dispositif de positionnement d'une pièce avec des moyens de transmission d'énergie et d'information sans contact

(30) Priorität: 09.10.2003 DE 10347612
(43) Veröffentlichungstag der Anmeldung: 13.04.2005
(73) Patentinhaber: Fertigungstechnik Weissenfels GmbH, 06667 Weissenfels (DE)
(72) Erfinder: Huch, Wolfgang, 55130 Mainz-Laubenheim (DE); Bercher, Heinrich, 78462 Konstanz (DE); Naturale, Luigi, 78464 Konstanz (DE)
(74) Vertreter: von Ahsen, Erwin-Detlef

(56) Entgegenhaltungen:
- DE-A- 3 816 135
- DE-A- 4 201 013
- DE-C- 19 651 232
- US-A- 5 588 195
- US-A- 5 770 936
- US-A- 5 814 900
- US-A- 6 047 535
- US-A- 6 101 084

## Beschreibung

Die Erfindung betrifft eine Vorrichtung zum Positionieren eines Werkstückes zur Bearbeitung, mit einem an einer Basis bewegbar gelagerten Tisch, an dem das Werkstück befestigbar ist, mit an dem Tisch angeordneten Erfassungsmitteln zum Erfassen eines Zustandes eines Bearbeitungsverfahrens des Werkstückes und zum Erzeugen von Erfassungsinformationen abhängig davon, mit Energieübertragungsmitteln zum Übertragen elektrischer Energie zu auf dem Tisch angeordneten Komponenten, und mit Informationsübertragungsmitteln zum Übertragen von Erfassungsinformationen der Erfassungsmittel zu einer der Basis zugeordneten Steuerung, wobei die Energieübertragungsmittel die Energie und die Informationsübertragungsmittel die Informationen induktiv und/oder kapazitiv über denselben Luftspalt übertragen, und mit weiteren ErFassungsmitteln zum Erfassen eines Energieübertragungszustandes und zum Erzeugen von weiteren Erfassungsinformationen abhängig davon, wobei die weiteren Erfassungsinformationen an die Steuerung als Rückkopplungsinformationen übertragen werden.

Eine derartige Vorrichtung ist aus der US 5 770 936 bekannt.

Bei der automatisierten Bearbeitung von Werkstücken werden diese Werkstücke meist auf Paletten befestigt und dann verschiedenen Spann- oder Drehtischen zur weiteren Bearbeitung zugeführt. Häufig ist eine Bewegung des Tisches relativ zu einer feststehenden Basis erforderlich. Da auf der Palette häufig eine Vielzahl von Sensoren, wie beispielsweise induktive Näherungsschalter, Drucksensoren, Temperatursensoren oder ähnliches angeordnet sind, und da außerdem häufig auch Aktuatoren auf der Palette erforderlich sind, ist eine Energieversorgung der auf der Palette angeordneten Komponenten einerseits sowie eine Übertragung der Informationen von den Sensoren zu einer zentralen Steuerung zum Steuern der Bearbeitung andererseits erforderlich. Meist werden hierfür sogenannte Schleifringkontakte verwendet. Diese Schleifringkontakte haben den Nachteil, daß sie dem Verschleiß unterliegen und insbesondere im Bereich der materialabtragenden Bearbeitung leicht verschmutzen können. Diese Verschmutzung bzw. der Verschleiß können zu Störungen und Fehlern bis hin zum vollständigen Ausfall führen. Insgesamt ist das Verwenden von Schleifringkontakten sehr wartungsintensiv. Teilweise werden auch berührungslose Methoden zum Übertragen der Energie bzw. der Informationen verwendet. Beispielsweise findet optische Signalübertragung mittels Lichtleitern und Infrarotstrahlung Verwendung. Nachteilig hierbei ist, daß die Lichtleiter der beiden zueinander beweglichen Teile präzise justiert sein müssen, damit eine fehlerfreie Übertragung möglich ist. Bei der induktiven Signalübertragung hingegen können Änderungen des Luftspaltes zwischen sich bewegenden Teilen großen Einfluß auf die Qualität der Signalübertragung haben. Insbesondere bei einem Verschmutzen oder einer Änderung des Luftspaltes können fehlerhafte Informationen übertragen werden.

Das der Erfindung zugrundeliegende Problem ist es, die Übertragung von Energie zu einem beweglichen Arbeitstisch sowie die Übertragung von Informationen von dem Arbeitstisch zu einer Steuerung auf einfache Weise, weitgehend verschleißfrei und nach Möglichkeit fehlerfrei, zu gewährleisten.

Das Problem wird dadurch gelöst, daß bei einer Vorrichtung der eingangs genannten Art die weiteren Erfassungsinformationen zum Korrigieren von Störungen und/oder Änderungen der Informationsübertragungsmittel an die Steuerung als Rückkopplungsinformationen übertragen werden.

Die Übertragung der Energie sowie der Informationen über denselben Luftspalt ermöglicht einerseits das Anordnen der Energieübertragungsmittel und der Informationsübertragungsmittel in demselben Übertragungskopf. Dadurch ergibt sich ein einfacher Aufbau mit einer geringen Anzahl Einzelkomponenten. Da ferner die Informationen über denselben Luftspalt übertragen werden wie die Energie, ergibt das Erfassen eines Energieübertragungszustandes, beispielsweise der übertragenen Spannung oder der aufgenommenen Leistung, auf einfache Weise Informationen über den Zustand des Luftspaltes. Diese Informationen können als Rückkopplungsinformationen einfach und effizient zum Korrigieren von Störungen bei der Informationsübertragung verwendet werden. Beispielsweise kann so eine Versorgungsspannung von 24V stabil gewährleitstet werden.

Vorzugsweise ist für die Energieübertragungsmittel und die Informationsübertragungsmittel ein gemeinsamer Übertragungskopf vorgesehen. Dadurch ergibt sich ein einfacher Aufbau. Insbesondere wenn dieser Übertragungskopf gekapselt ist, ergibt sich eine hohe Widerstandsfähigkeit gegen Verschmutzen. Der Übertragungskopf kann einen Kern aufweisen, auf dem eine Energieübertragungsspule und eine Informationsübertragungsspule mit voneinander verschiedenen Magnetfeldorientierungen angeordnet sind. Auf diese Weise lassen sich die Felder für die Energieübertragung und für die Informationsübertragung weitgehend voneinander trennen.

Bei einer Weiterbildung sind die weiteren Erfassungsmittel dem Tisch zugeordnet und erfassen eine übertragene Spannung. Diese Spannung wird erzeugt, indem Energie induktiv über den Luftspalt übertragen wird. Folglich gibt diese Spannung einen guten Aufschluß über den Zustand des Luftspaltes. Alternativ oder zusätzlich können die weiteren Erfassungsmittel der Basis zugeordnet sein und einen Strom oder eine Leistungsaufnahme einer Versorgungsvorrichtung für die Energieübertragungsmittel erfassen. Da der Primärstrom bzw. die Leistungsaufnahme dieser Versorgungsvorrichtung ebenfalls abhängig von dem Zustand des Luftspaltes sind, gibt auch das Erfassen des Stroms oder der Leistungsaufnahme dieser Versorgungsvorrichtung einen guten Aufschluß über den Zustand des Luftspaltes. Es ist auch möglich, daß die weiteren Erfassungsmittel die Temperatur einer dem Tisch oder der Basis zugeordneten elektrischen Schaltung erfassen. Diese Informationen über die Temperatur der elektrischen Schaltung können ebenfalls zur Rückkopplung geeignet sein. Hier können zum Beispiel interne Protokolle erstellt werden. Signale eines zusätzlichen Sensors lassen sich zur Prozeßsteuerung verwenden.

Eine andere Weiterbildung der Erfindung zeichnet sich dadurch aus, daß eine Regelung einer Energieversorgung für die auf dem Tisch angeordneten Komponenten mittels Steuerung einer Frequenz der den Energieübertragungsmitteln zugeführten Spannung erfolgt. Diese Steuerung kann beispielsweise mittels Pulsweitenmodulation durchgeführt werden. Da hier die Energie ähnlich einem Transformator übertragen wird, läßt sich durch Frequenzsteuerung die Energieversorgung einfach und zuverlässig steuern.

Vorzugsweise erfolgt die Informationsübertragung digital.Insbesondere ist die Verwendung eines Binärcodes vorteilhaft. Besonders unanfällig gegen Störungen ist diese digitale Übertragung, wenn eine Frequenzcodierung der Digitalwerte und/oder der Binärwerte erfolgt. Hierbei sind dann nicht diskrete Spannungsniveaus zu detektieren. Vielmehr ist es zur Demodulation ausreichend, einzelne Frequenzen zu erkennen. Es ist außerdem von Vorteil, wenn die Frequenzzuordnung wählbar ist. Dieses Wählen kann insbesondere mittels sogenannter Jumper ausgeführt werden. In diesem Fall lassen sich die verwendeten Zuordnungen der Frequenzen abhängig von den Umgebungsbedingungen so wählen, daß eine möglichst fehlerfreie Übertragung möglich ist.

Bei einer Weiterbildung sind Demodulationsmittel zum Decodieren der übertragenen Informationen vorgesehen, die Logikbausteine zum Decodieren aufweisen. Insbesondere bei der Ausführungsform, bei der eine Frequenzcodierung der Digitalwerte und/oder der Binärwerte erfolgt, können so die einzelnen übertragenen Werte einfach mittels Vergleich mit einer Referenzfrequenz durch die Logikbausteine erkannt und die übertragenen Informationen so demoduliert werden. Vorteilhaft ist es außerdem, wenn das Decodieren mittels Phasendetektion erfolgt.

Eine Weiterbildung der Erfindung zeichnet sich dadurch aus, daß bidirektionale Informationsübertragungsmittel vorgesehen sind. Diese bidirektionalen Übertragungsmittel ermöglichen einerseits das Erfassen von Meßwerten, die dem Bearbeitungsprozeß entsprechen. Andererseits sind aber auch Steuersignale zu den Komponenten auf dem Tisch zum Bearbeiten des Werkstückes übertragbar, beispielsweise zu dort angeordneten Aktuatoren.

Es kann bei der Vorrichtung nach der Erfindung ein Übertragungskopf für radiale oder axiale Kopplung verwendet werden. Bei den axialen Kopplungen treten geringere Streufeldverluste auf als bei der radialen Kopplung. Jedoch ermöglicht die radiale Kopplung ein Anordnen mindestens eines Übertragungskopfes eines eine Übertragungsstrecke bildenden Übertragungskopfpaares außerhalb einer für eine Drehung des Tisches erforderlichen Schwenkachse.

Eine Weiterbildung der Erfindung ist gekennzeichnet durch einen an dem Tisch befestigbaren Träger zum Aufnehmen des Werkstückes, der Erfassungsmittel und/oder der Komponenten, wobei die Energieübertragungsmittel und/oder die Informationsübertragungsmittel die Energie und/oder die Informationen auch induktiv und/oder kapazitiv zwischen Tisch und Träger übertragen. In diesem Fall kann das Werkstück und die erforderlichen Sensoren bzw. Aktuatoren an dem Träger befestigt sein, wobei zum Bearbeiten der Träger auf den Tisch aufgesetzt wird. Als Träger werden häufig sogenannte Paletten verwendet. Das Austauschen der Paletten erfolgt in der Regel vollautomatisiert. Da hierbei wegen der Energieübertragungsmittel und Informationsübertragungsmittel mit den Erfindungsmerkmalen eine Energieübertragung und Informationsübertragung zuverlässig erfolgt, ohne daß hierzu Steck- und Schleifkontakte erforderlich sind, und ohne daß es zu Übertragungsfehlern wegen fehlerhafter Justierung oder Verschmutzung bzw. Verschleiß kommen kann, lassen sich so langfristig gute Bearbeitungsergebnisse bei hoher Geschwindigkeit erzielen.

Im folgenden werden Ausführungsbeispiele der Erfindung anhand der Zeichnungen näher erläutert. Es zeigen:
- Fig. 1: eine schematische Darstellung eines Drehtisches mit den Erfindungsmerkmalen,
- Fig. 2: eine schematische Darstellung eines Übertragungskopfes von Fig. 1,
- Fig. 3: einen Schnitt durch zwei einander zugewandten Übertragungsköpfen,
- Fig. 4: ein Blockschaltbild der Übertragungsvorrichtung von Fig. 1, und
- Fig. 5: eine schematische Darstellung eines Drehtisches als ein weiteres Ausführungsbeispiel mit den Erfindungsmerkmalen.

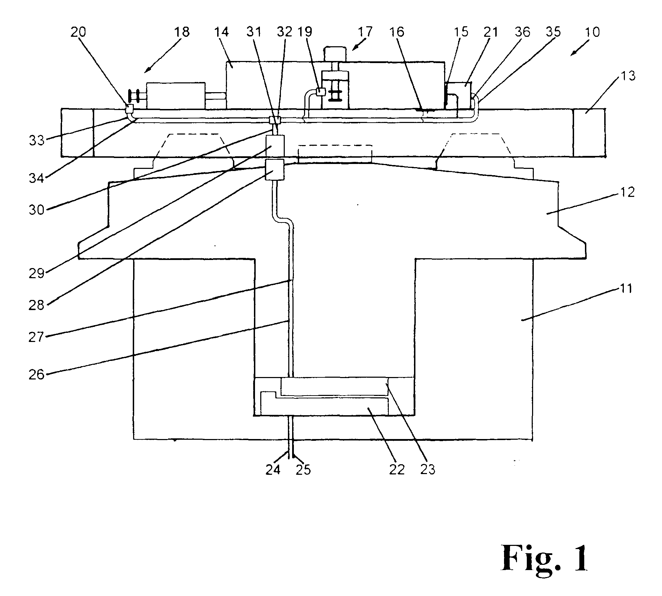

Fig. 1 zeigt eine schematische Darstellung einer Vorrichtung zum Positionieren eines Werkstückes zur Bearbeitung. Dargestellt ist ein Drehtisch 10 mit einer feststehenden Basis 11, an der ein Tisch 12 schwenkbar oder rotierbar um eine Achse A angeordnet ist. Auf dem Tisch 12 ist ein Träger 13 befestigt. Der Träger 13 ist eine sogenannte Palette 13, die auf bekannte Weise an dem Tisch 12 befestigt ist.

Auf der von dem Tisch 12 abgewandten Seite der Palette 13 ist ein Werkstück 14 zur Bearbeitung angeordnet. Außerdem sind auf der von dem Tisch 12 abgewandten Seite der Palette 13 mehrere Sensoren 15, 16, 17, 18 angeordnet. Der Sensor 15 ist ein Temperatursensor 15 zum Bestimmen der Temperatur des Werkstückes 14. Der Sensor 16 ist ein Drucksensor 16 zum Ermitteln des Gewichtes bzw. der Anpreßkraft auf das Werkstück 14. Der Sensor 17 ist ein Höhensensor 17 zum Bestimmen der Höhe der oberen Oberfläche des Werkstückes 14 und somit der Dicke des Werkstückes 14. Der Sensor 18 ist ein Lagesensor 18 zum Ermitteln der Lage des Werkstückes 14 auf der Palette 13. Der Höhensensor 17 und der Lagesensor 18 weisen jeweils induktive Näherungsgeber 19, 20 auf. Außerdem ist in der Figur auf der von dem Tisch 12 abgewandten Seite der Palette 13 ein Aktuator 21 schematisch dargestellt, der zum Beeinflussen des Werkstückes 14 dient. Der Aktuator 21 kann beispielsweise eine Heizung zum Heizen des Werkstückes 14 oder eine Verspannvorrichtung zum Beaufschlagen des Werkstückes 14 mit einer Spannkraft sein.

Wie sich der Fig. 1 entnehmen läßt, sind zwischen der Basis 11 und dem Tisch 12 im Bereich der Schwenkachse A zwei Übertragungsköpfe 22, 23 einander zugewandt angeordnet. Der Übertragungskopf 22 ist mit einer Leitung 24 und einer Leitung 25 verbunden. Der besseren Übersicht halber ist hier nur eine Leitung 24 und eine Leitung 25 eingezeichnet. Üblicherweise werden hier allerdings anstelle der Leitung 24 mindestens eine Zuleitung und eine Rückleitung und anstelle der Leitung 25 ebenfalls mindestens eine Zuleitung und eine Rückleitung vorgesehen sein. Die Leitung 24 dient zum Versorgen der auf der Palette 13 angeordneten Komponenten mit Energie und ist an ihrem anderen Ende an eine nicht in der Figur dargestellte Wechselspannungsquelle angeschlossen. Die Leitung 25 dient zum Senden und Empfangen von Informationen und ist an ihrem von dem Übertragungskopf 22 abgewandten Ende an eine nicht in der Figur dargestellte Modulator/Demodulatoreinheit angeschlossen. Der Übertragungskopf 23 ist über zwei den Leitungen 24, 25 entsprechende Leitungen 26, 27 mit einem Übertragungskopf 28 verbunden. Der Übertragungskopf 28 ist einem Übertragungskopf 29 zugewandt, der an der von dem Werkstück 14 abgewandten Seite der Palette 13 angeordnet ist. Der Übertragungskopf 29 ist mittels Leitungen 30, 31 mit einer Modulartor/Demodulatoreinheit 32 verbunden. Die Modulator/Demodulatoreinheit 32 ist mittels Leitungen 33, 34 mit dem Näherungssensor 20 und mittels Leitungen 35, 36 mit dem Drucksensor 16 und dem Näherungssensor 19 verbunden. Außerdem ist die Modulator/Demodulatoreinheit 32 mittels der Leitungen 35, 36 mit dem Aktuator 21 und mittels der Leitung 36 mit dem Temperatursensor 15 verbunden.

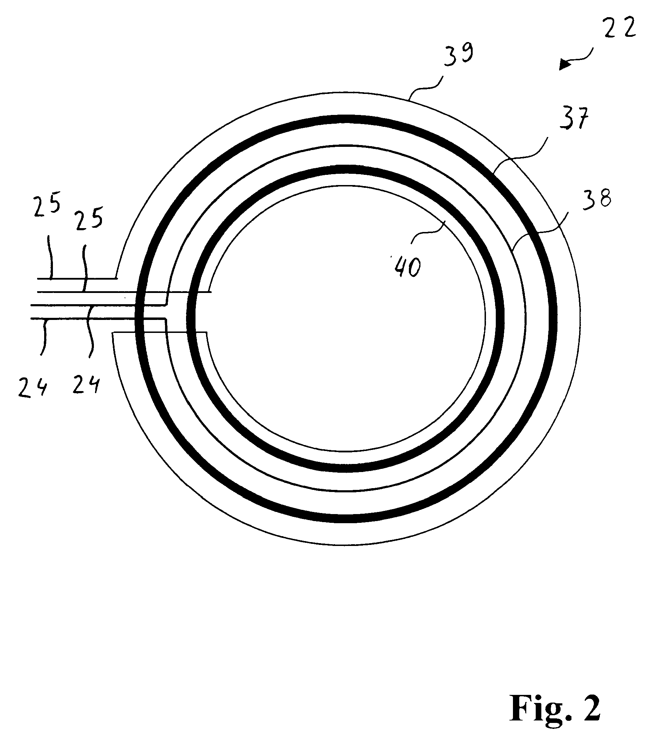

Fig. 2 zeigt schematisch den Aufbau des Übertragungskopfes 22. Wie sich der Figur entnehmen läßt, weist der Übertragungskopf 22 einen Kern 37 auf, auf den eine Spule 38 und eine Spule 39, 40 gewickelt ist. Die Spule 38 ist in die Senke zwischen die Ränder des Ringkernes 37 gewickelt und mit den Leitungen 24 verbunden. Die Spule 39, 40 führt mit einer mit einer Leitung 25 verbundenen äußeren Wicklung 39 zunächst um den Ringkern 37 herum, wechselt dann auf die Innenseite des Ringkernes 37 und führt mit einer inneren Wicklung 40 gegenläufig wieder zurück. Die Wicklung 40 ist an einem Ende mit der Wicklung 39 und an ihrem anderen Ende mit einer Leitung 25 verbunden.

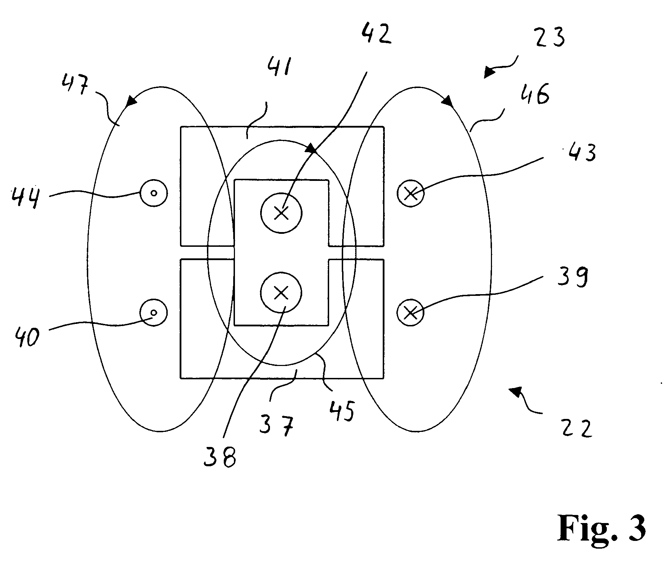

Fig. 3 zeigt einen Schnitt durch einen Randbereich des Übertragungskopfes 22 und einen Randbereich des diesem zugeordneten Übertragungskopfes 23. Der Übertragungskopf 23 entspricht in seinem Aufbau dem Übertragungskopf 22 und hat einen Ringkern 41, eine Spule 42 und eine Spule 43, 44 mit einer äußeren Wicklung 43 und einer inneren Wicklung 44. Wie sich der Fig. 3 entnehmen läßt, sind auf die beschriebene Weise die Felder der Spulen 38, 42 und der Spulen 39 und 43 bzw. 40 und 44 weitgehend voneinander getrennt. Das von der Spule 38 erzeugte Magnetfeld 45 schließt die Spule 42 ein und induziert dort eine gewünschte Spannung zur Energieversorgung. Gezeigt ist in der Figur eine Momentaufnahme eines Zustandes der jeweiligen Wechselströme durch die Spulen 38, 42 und 39, 43 bzw. 40, 44. Das von der äußeren Wicklung 39 erzeugte Magnetfeld 46 schließt die äußere Wicklung 43 ein. Das gegenläufig zu dem Magnetfeld 46 von der inneren Wicklung 40 erzeugte Magnetfeld 47 schließt hingegen die innere Wicklung 44 ein. Auf diese Weise lassen sich die Felder 46, 47 zur Informationsübertragung weitgehend von dem Feld 45 zur Energieübertragung trennen.

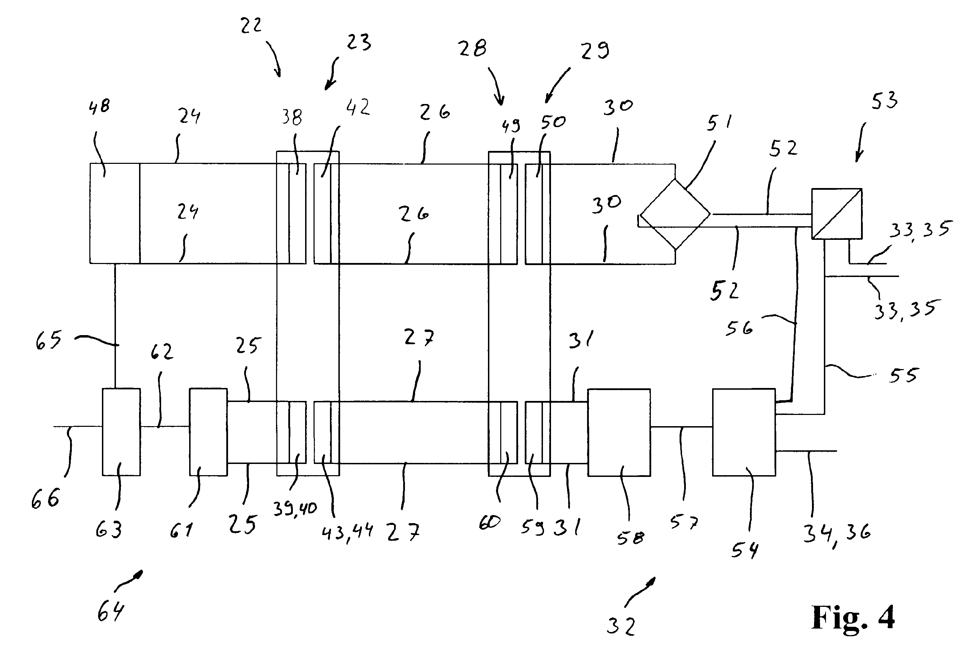

Fig. 4 zeigt ein Blockschaltbild der Vorrichtung zur Energieversorgung und zur Informationsübertragung mit den Erfindungsmerkmalen. Gleiche Elemente tragen die gleichen Bezugsziffern wie bei den Fig. 1 bis 3. Wie sich der Fig. 4 entnehmen läßt, ist eine Wechselspannungsquelle 48 mittels zweier Leitungen 24 mit der Spule 38 des Übertragungskopfes 22 verbunden. Der Spule 38 zugeordnet ist eine Spule 42 des Übertragungskopfes 23 und mittels Leitungen 26 mit einer Spule 49 des Übertragungskopfes 28 verbunden. Der Spule 49 zugeordnet ist eine Spule 50 des Übertragungskopfes 29, die wiederum mittels Leitungen 30 mit einer bekannten Gleichrichterschaltung 51 verbunden ist. Die Gleichrichterschaltung 51 kann beispielsweise eine bekannte Gleichrichterschaltung mittels Dioden sein und ist wiederum mittels Leitungen 52 mit einem Spannungswandler 53 verbunden. Bei dem gezeigten Ausführungsbeispiel ist als Spannungswandler ein DC-DC-Spannungswandler 53 vorgesehen. Der DC-DC Spannungswandler 53 ist mittels der Leitungen 33, 35 mit den nicht in der Figur dargestellten Sensoren 15, 16, 17, 18 und dem Aktuator 21 verbunden.

Eine Steuerung 54 ist mittels einer Leitung 55 mit einem Ausgang des DC-DC Spannungswandlers 53 und mit einer weiteren Leitung 56 über die Leitung 52 mit der Gleichrichterschaltung 51 verbunden. Außerdem ist die Steuerung 54 mittels der Leitungen 34, 36 mit den Sensoren 15, 16, 17, 18 und dem Aktuator 21 verbunden. Die Steuerung 54 ist mittels mehrerer Leitungen 57 mit einem Modulator/Demodulator 58 verbunden, von denen in der Figur nur eine Leitung 57 stellvertretend dargestellt ist. Die Steuerung 54 und der Modulator/Demodulator 58 bilden gemeinsam die Modulator/Demodulatoreinheit 32.

Der Modulator/Demodulator 58 ist mittels zweier Leitungen 31 mit einer Spule 59 des Übertragungskopfes 29 verbunden, die mit einer dieser zugeordneten Spule 60 des Übertragungskopfes 28 zusammenwirkt. Die Spule 60 des Übertragungskopfes 28 ist mittels der Leitungen 27 mit der Spule 43, 44 des Übertragungskopfes 23 verbunden. Der Spule 43, 44 zugeordnet ist die Spule 39, 40 des Übertragungskopfes 22 mit den Leitungen 25 mit einem Modulator/Demodulator 61 verbunden. Der Modulator/Demodulator 61 ist mittels mehrerer Leitungen 62 mit einer Steuerung 63 verbunden, von denen in der Figur zur besseren Übersicht nur eine Leitung 62 eingezeichnet ist. Der Modulator/Demodulator 61 und die Steuerung 63 bilden gemeinsam eine Modulator/Demodulatoreinheit 64. Die Steuerung 63 ist mittels einer Leitung 65 mit der Wechselspannungsquelle 48 und mittels einer Leitung 66 mit einer zentralen Steuerung verbunden, die nicht in der Figur dargestellt ist. Auch wenn in den Figuren die Modulator/Demolatoreinheiten 32, 64 jeweils getrennt von den Übertragungsköpfen 22, 29 dargestellt sind, können die hierfür erforderlichen Schaltungen auch bereits in die Übertragungsköpfe 22, 29 integriert werden.

Im folgenden wird die Wirkungsweise der Energie- und Informationsübertragungsvorrichtung des Drehtisches 10 anhand der Fig. 1 bis 4 näher erläutert. Mittels der Spulen 38, 42 und 49, 50 der Übertragungsköpfe 22, 23, 28, 29 werden die auf der Palette 13 angeordneten Komponenten mit Energie versorgt. Zu diesem Zweck wird die Spule 38 über die Leitungen 24 von der Wechselspannungsquelle 48 mit einer Wechselspannung versorgt. Der auf diese Weise durch die Spule 38 fließende Wechselstrom erzeugt ein Magnetfeld, das induktiv an die Spule 42 koppelt. Der induktiv in der Spule 42 des Übertragungskopfes 23 erzeugte Wechselstrom wird mittels der Leitungen 26 der Spule 49 des Übertragungskopfes 28 zugeleitet, wo dieser wiederum ein elektromagnetisches Wechselfeld erzeugt, das induktiv an die Spule 50 des Übertragungskopfes 29 koppelt. Die in der Spule 50 induktiv erzeugte Wechselspannung wird über die Leitungen 30 der Gleichrichterschaltung 51 zugeleitet.

Mit den Leitungen 52 wird die von der Gleichrichterschaltung 51 gleichgerichtete und erforderlichenfalls durch nicht in der Fig. 4 dargestellte Mittel geglättete Gleichspannung dem DC-DC Gleichspannungswandler 53 zugeleitet, der diese Gleichspannung in eine Gleichspannung mit dem gewünschten Spannungswert transformiert und über die Leitungen 33, 35 den Komponenten auf der Palette 13 zuleitet. Gleichzeitig versorgt der DC-DC Spannungswandler 53 auch die Steuerung 54 über die Leitung 55 mit der erforderlichen Betriebsspannung. Eine Versorgung des Modulators/Demodulators 58 erfolgt beispielsweise über eine der Leitungen 57.

Die Steuerung 54 erhält zusätzlich über die Leitung 56 die von der Gleichrichterschaltung 51 gleichgerichtete Spannung. Die Steuerung ermittelt aus dem Wert dieser gleichgerichteten Spannung den Zustand der Kopplung der Spule 49 an die Spule 50 und der Kopplung der Spule 38 an die Spule 42. Auf diese Weise wird eine Regelgröße für die Wechselspannungsquelle 48 erzeugt. Diese Regelgröße wird zusammen mit den Sensordaten, die die Steuerung 54 über die Leitungen 34, 36 erhält, über die Leitungen 57 an den Modulator/Demodulator 58 übertragen und von diesem digital codiert. Zu diesem Zweck werden die zu übertragenden Werte binär in Frequenzen codiert, wobei die Zuordnung der Frequenzen zu den Werten Null und Eins bei dem Modulator/Demodulator 58 beispielsweise mittels Jumper wählbar ist. Die so in ein Frequenzsignal umgewandelten Sensordaten und die Regelgröße werden der Spule 59 über die Leitungen 31 zugeleitet. Die Spule 59 erzeugt aus dieser ihr zugeleiteten Wechselspannung ein elektromagnetisches Feld, das an die Spule 60 des Übertragungskopfes 28 koppelt. Die induktiv in der Spule 60 erzeugte Spannung wird wiederum über die Leitungen 27 der Spule 43, 44 zugeleitet, wo ein elektromagnetisches Feld erzeugt wird. Das von der Spule 43, 44 erzeugte elektromagnetische Feld koppelt induktiv an die Spule 39, 40, wo eine entsprechende Spannung induziert und mittels der Leitungen 25 dem Modulator/Demodulator 61 zugeleitet wird.

Der Modulator/Demodulator 61 weist geeignete Filter auf, um Störsignale von den Nutzsignalen zu trennen. Das derart gefilterte Signal wird zunächst mittels einer Nullspannungskompensation in sogenannte Logikpegel umgewandelt. Hierzu erfolgt beispielsweise mittels eines nicht in der Figur dargestellten Komparators ein Vergleich mit einer definierten Referenzspannung. Das so aufbereitete Signal wird mittels Logikbausteinen, beispielsweise sogenannten Flip-Flops, mit einer Referenzfrequenz verglichen. Mittels Vergleichen mit dieser Referenzfrequenz wird unterschieden, ob die jeweils empfangenen Frequenzsignale einer Null oder einer Eins in der Binärdarstellung entsprechen. Das erhaltene binäre Signal wird über die Leitung 62 der Steuerung 63 zugeleitet und dort ausgewertet. Die von der Steuerung 54 mittels Auswerten der über die Leitung 56 erhaltenen Spannung der Gleichrichterschaltung 51 ermittelte Regelgröße wird in ein entsprechendes Regelsignal umgewandelt und über die Leitung 65 der Wechselspannungsquelle 48 zugeleitet, die daraufhin die entsprechende Anpassung der über die Leitungen 24 an die Spule 28 zugeleiteten Wechselspannung vornimmt. Diese Anpassung kann beispielsweise in der Änderung der Frequenz der Wechselspannung, der Phase oder der Amplitude bestehen. Die Steuerung 63 kann auch mittels einer der Leitungen 65 die Stromaufnahme oder die Leistungsaufnahme der Wechselspannungsquelle 48 ermitteln und abhängig davon die Anpassung vornehmen. Die mittels der Leitungen 34, 36 von den Sensoren 15, 16, 17, 18 erhaltenen Sensorsignale werden von der Steuerung 63 über die Leitung 66 an eine zentrale Steuerung weitergeleitet, die abhängig von diesen Sensorsignalen die entsprechenden Bearbeitungsvorgänge steuert.

Zur Steuerung des Aktuators 21 werden außerdem Steuersignale über die Leitung 66 an die Steuerung 63 übertragen. Die Steuerung 63 steuert über die Leitung 62 den Modulator/Demodulator 61 zum Erzeugen der entsprechend den erhaltenen Signalen frequenzcodierten Spannung zum Beaufschlagen der Spule 39, 40 mit dieser Wechselspannung über die Leitungen 25. Das Signal wird dann induktiv von der Spule 39, 40 an die Spule 43, 44 und von dort über die Leitungen 27 an die Spule 60 übertragen. Mittels induktiver Kopplung wird in der Spule 59 eine den Signalen entsprechende Spannung induziert und über die Leitungen 31 an den Modulator/Demodulator 58 weitergeleitet. Dort erfolgt auf ähnliche Weise wie bei dem Modulator/Demodulator 61 ein Erzeugen eines Logikpegels mittels einer Nullspannungskompensation, ein Vergleich der so erzeugten Frequenzsignale mit einer Referenzfrequenz und abhängig von dem Vergleichsergebnis mit der Referenzfrequenz das Erzeugen eines Binärcodes aus den Werten Null und Eins entsprechend dem Vergleichsergebnis. Dieser Binärcode wird über die Leitungen 57 der Steuerung 54 zugeleitet, wo entsprechend den erhaltenen Signalen eine Ansteuerung des Aktuators 21 über die Leitung 36 erfolgt.

Auf diese Weise ist eine bidirektionale Signalübertragung von der Basis 11 zu der Palette 13 und umgekehrt mittels induktiver Kopplung über die Übertragungsköpfe 22, 23 und 28, 29 möglich, wobei gleichzeitig die auf der Palette 13 erforderliche Energie ebenfalls über die Übertragungsköpfe 22, 23 und 28, 29 an die Palette 13 übertragen wird. Da die Übertragungsköpfe 22, 23 und 28, 29 für die Übertragung der Energie und der Informationen jeweils denselben Luftspalt verwenden, ist die Überwachung der an der Palette 13 ankommenden Spannung aussagekräftig für den Zustand der jeweiligen Luftspalte, so daß eine Regelung der Spannungsquelle 48 eine konstante Energieversorgung der Komponenten auf der Palette 13 ermöglicht. Gleichzeitig können Störeinflüsse durch Überwachen der Regelgröße kompensiert werden.

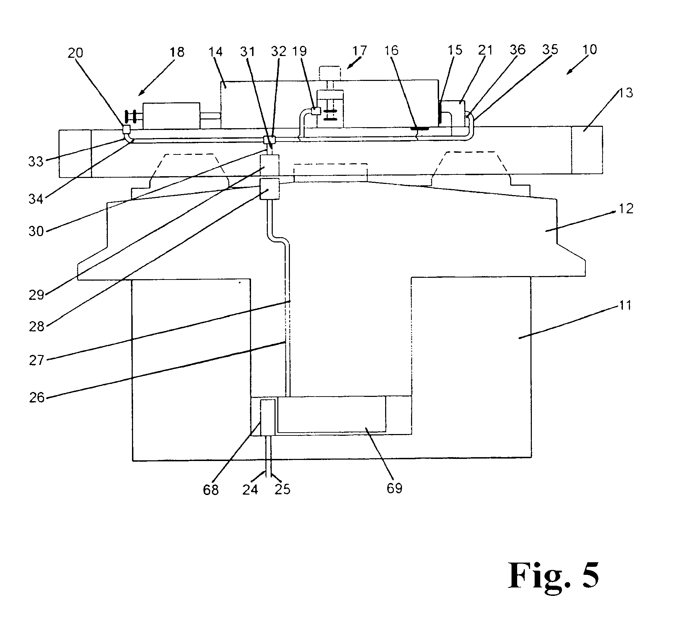

Fig. 5 zeigt ein weiteres Ausführungsbeispiel eines Drehtisches 67 mit den Erfindungsmerkmalen. Gleiche Elemente tragen die gleichen Bezugsziffern. Wie sich der Figur entnehmen läßt, weist der Drehtisch 67 anstelle der Übertragungsköpfe 22, 23 Übertragungsköpfe 68, 69 auf. Die Übertragungsköpfe 68, 69 entsprechen in ihrer Wirkungsweise den Übertragungsköpfen 22, 23, wobei die Übertragungsköpfe 68, 69 nicht wie die Übertragungsköpfe 22, 23 axial, sondern radial miteinander koppeln.

### Bezugszeichenliste:

- 10: Drehtisch
- 11: Basis
- 12: Tisch
- 13: Palette
- 14: Werkstück
- 15: Temperatursensor
- 16: Drucksensor
- 17: Höhensensor
- 18: Lagesensor
- 19: Näherungssensor
- 20: Näherungssensor
- 21: Aktuator
- 22: Übertragungskopf
- 23: Übertragungskopf
- 24: Leitung
- 25: Leitung
- 26: Leitung
- 27: Leitung
- 28: Übertragungskopf
- 29: Übertragungskopf
- 30: Leitung
- 31: Leitung
- 32: Modulator/Demodulatoreinheit
- 33: Leitung
- 34: Leitung
- 35: Leitung
- 36: Leitung
- 37: Kern
- 38: Spule
- 39: Spule
- 40: Spule
- 41: Kern
- 42: Spule
- 43: Spule
- 44: Spule
- 45: Feld
- 46: Feld
- 47: Feld
- 48: Wechselspannungsquelle
- 49: Spule
- 50: Spule
- 51: Gleichrichterschaltung
- 52: Leitung
- 53: DC-DC Spannungswandler
- 54: Steuerung
- 55: Leitung
- 56: Leitung
- 57: Leitung
- 58: Modulator/Demodulator
- 59: Spule
- 60: Spule
- 61: Modulator/Demodulator
- 62: Leitung
- 63: Steuerung
- 64: Modulator/Demodulatoreinheit
- 65: Leitung
- 66: Leitung
- 67: Drehtisch
- 68: Übertragungskopf
- 69: Übertragungskopf

## Patentansprüche

1. Vorrichtung zum Positionieren eines Werkstückes zur Bearbeitung, mit einem an einer Basis (11) bewegbar gelagerten Tisch (12), an dem das Werkstück (14) befestigbar ist, mit an dem Tisch (12) angeordneten Erfassungsmitteln (15, 16, 17, 18) zum Erfassen eines Zustandes eines Bearbeitungsverfahrens des Werkstückes (14) und zum Erzeugen von Erfassungsinformationen abhängig davon, mit Energieübertragungsmitteln (38, 42, 49, 50) zum Übertragen elektrischer Energie zu auf dem Tisch (12) angeordneten Komponenten (16, 17, 18, 21), mit Informationsübertragurigsmitteln (39, 40, 43, 44, 59, 60) zum Übertragen von Erfassungsinformationen der Erfassungsmittel (15, 16, 17, 18) zu einer der Basis (11) zugeordneten Steuerung (63), wobei die Energieübertragungsmittel (38, 42, 49, 50) die Energie und die Informationsübertragungsmittel (39, 40, 43, 44, 59, 60) die Informationen induktiv und/oder kapazitiv über denselben Luftspalt übertragen, und mit weiteren Erfassungsmitteln (54) zum Erfassen eines Energieübertragungszustandes und zum Erzeugen von weiteren Erfassungsinformationen abhängig davon, wobei die weiteren Erfassungsinformationen an die Steuerung (63) als Rückkopplungsinformationen übertragen werden, **dadurch gekennzeichnet, dass** die weiteren Erfassungsinfarmatianen zum Korrigieren von Störungen und/oder Änderungen der Informationsübertragungsmittel (39, 40, 43, 44, 59, 60) an die Steuerung als Rückkopplungsinformationen übertragen werden.

2. Vorrichtung nach Anspruch 1, **dadurch gekennzeichnet, daß** für die Energieübertragungsmittel (38, 42, 49, 50) und die Informationsübertragungsmittel (39, 40, 43, 44, 59, 60) ein gemeinsamer Übertragungskopf (22, 23, 28, 29, 68, 69) vorgesehen ist, wobei vorzugsweise der Übertragungskopf (22, 23, 28, 29, 68, 69) einen Kern (37, 41) aufweist, auf dem eine Energieübertragungsspule und eine Informationsübertragungsspule (39, 40, 43, 44, 59, 60) mit voneinander verschiedenen Magnetfeldorientierungen (45, 46, 47) angeordnet sind.

3. Vorrichtung nach Anspruch 1 oder 2, **dadurch gekennzeichnet, daß** die weiteren Erfassungsmittel (54) dem Tisch (12) zugeordnet sind und eine übertragene Spannung erfassen.

4. Vorrichtung nach einem der vorhergehenden Ansprüche, **dadurch gekennzeichnet, daß** die weiteren Erfassungsmittel (64) der Basis (11) zugeordnet sind und einen Strom oder eine Leistungsaufnahme einer Versorgungsvorrichtung (48) für die Energieübertragungsmittel (38, 42, 49, 50) erfassen.

5. Vorrichtung nach einem der vorhergehenden Ansprüche, **dadurch gekennzeichnet, daß** die weiteren Erfassungsmittel die Temperatur einer dem Tisch (12) oder der Basis (11) zugeordneten elektrischen Schaltung erfassen.

6. Vorrichtung nach einem der vorhergehenden Ansprüche, **dadurch gekennzeichnet, daß** eine Regelung einer Energieversorgung (48) für die auf dem Tisch (12) angeordneten Komponenten(16, 17, 18, 21, 54) mittels Steuerung einer Frequenz der den Energieübertragungsmitteln (38, 42, 49, 50) zugeführten Spannung erfolgt, insbesondere mittels Pulsweitenmodulation.

7. Vorrichtung nach einem der vorhergehenden Ansprüche, **dadurch gekennzeichnet, daß** die Informationsübertragung digital erfolgt, insbesondere binär, daß insbesondere eine Frequenzcodierung der Digitalwerte und/oder der Binärwerte vorgesehen ist, wobei vorzugsweise die Frequenzzuordnung wählbar ist, insbesondere mittels Jumper, und/oder daß Demodulationsmittel (50, 61) zum Decodieren, insbesondere mittels Phasendetektion, der übertragenen Informationen vorgesehen sind, die Logikbausteine zum Decodieren aufweisen.

8. Vorrichtung nach einem der vorhergehenden Ansprüche, **gekennzeichnet durch** bidirektionale Informationsübertragungsmittel (39, 40, 43, 44, 59, 60).

9. Vorrichtung nach einem der vorhergehenden Ansprüche, **gekennzeichnet durch** einen Übertragungskopf (22, 23, 28, 29, 68, 69) für radiale oder axiale Kopplung.

10. Vorrichtung nach einem der vorhergehenden Ansprüche, **gekennzeichnet durch** einen an dem Tisch (12) befestigbaren Träger (13) zum Aufnehmen des Werkstückes (14) der Erfassungsmittel (15, 16, 17, 18) und/oder der Komponenten (21), wobei die Energieübertragungsmittel (38, 42, 49, 50) und/oder die Informationsübertragungsmittel (39, 40, 43, 44, 59, 60) die Energie und/oder die Informationen ebenfalls induktiv und/oder kapazitiv zwischen Tisch (12) und Träger (13) übertragen.

## Claims

1. Device for positioning a work-piece for machining, comprising a table (12) supported for movement on a base (11), on which the work-piece (14) can be attached, comprising detection means (15, 16, 17, 18), disposed on said table (12), for detecting a state of a process for machining said work-piece (14) and for generating detection information as a function thereof, comprising energy transfer means (38, 42, 49, 50) for transfer of electrical energy to components (16, 17, 18, 21) disposed on said table (12), comprising information transfer means (39, 40, 43, 44, 59, 60) for the transfer of detection information from said detecting means (15, 16, 17, 18) to a controller (63) associated with said base (11), wherein said energy transfer means (38, 42, 49, 50) transfer the energy and said information transfer means (39, 40, 43, 44, 59, 60) transfer the information by induction and/or in a capacitive manner via the same gap, and comprising further detection means (54) for detecting an energy transfer state and for generating further detection information as a function thereof, with said further detection information being transmitted as feedback information to said controller (63), **characterised in that** said further detection information is transmitted for correction of malfunctions and/or changes of said information transfer means (39, 40, 43, 44, 59, 60) as feedback information to said controller.

2. Device according to Claim 1, **characterised in that** a common transfer head (22, 23, 28, 29, 68, 60) is provided for said energy transfer means (38, 42, 49, 50) and said information transfer means (39, 40, 43, 44, 59, 60), with said transfer head (22, 23, 28, 29, 68, 60) including preferably a core (37, 41) on which an energy transfer coil and an information transfer coil (39, 40, 43, 44, 59, 60) are disposed with magnetic-field orientations (45, 46, 47) different from each other.

3. Device according to Claim 1 or 2, **characterised in that** said further detection means (54) are associated with said table (12) and detect a transferred voltage.

4. Device according to any of the preceding Claims, **characterised in that** said further detection means (64) are associated with said base (11) and detect a current or an energy consumption of a supply device (48) for said energy transfer means (38, 42, 49, 50).

5. Device according to any of the preceding Claims, **characterised in that** said further detection means detect the temperature of an electric circuit associated with said table (12) or said base (11).

6. Device according to any of the preceding Claims, **characterised in that** a an energy supply unit (48) for said components (16, 17, 18, 21, 54) disposed on said table (12) is adjusted by control of a frequency of the voltage supplied to said energy transfer means (38, 42, 49, 50), in particular by pulse width modulation.

7. Device according to any of the preceding Claims, **characterised in that** said information transfer is implemented in a digital form, in particular a binary form, that frequency coding of the digital values and/or the binary values is provided in particular, with the frequency association being preferably selectable, in particular by means of jumpers, and/or that demodulation means (50, 61) are provided for decoding, in particular by means of phase detection, of the transferred information, which means include logic components for decoding.

8. Device according to any of the preceding Claims, **characterised by** bidirectional information transfer means (39, 40, 43, 44, 59, 60).

9. Device according to any of the preceding Claims, **characterised by** a transfer head (22, 23, 28, 29, 68, 69) for radial or axial coupling.

10. Device according to any of the preceding Claims, **characterised by** a support (13) adapted for being attached to said table (12) for receiving said work-piece (14), said detection means (15, 16, 17, 18) and/or said components (21), with said energy transfer means (38, 42, 49, 50) and/or said information transfer means (39, 40, 43, 44, 59, 60) transferring the energy and/or said information, equally by induction and/or in a capacitive manner, between said table (12) and said support (13).

## Revendications

1. Dispositif à positionner une pièce d'oeuvre à usiner, comprenant une table (12) portée, de façon mobile, à une substructure (11), sur laquelle ladite pièce d'oeuvre (14) se peut fixer, comprenant des moyens détecteurs (15, 16, 17, 18), disposés à ladite table (12), à détecter un état d'une opération à usiner ladite pièce d'oeuvre (14) et à engendrer des informations de détection en fonction de la détection, comprenant des moyens transporteurs de l'énergie (38, 42, 49, 50) afin de transporter de l'énergie aux composants (16, 17, 18, 21) disposés à ladite table (12), comprenant des moyens de transfert des informations (39, 40, 43, 44, 59, 60) à transférer des informations de détection à partir desdits moyens détecteurs (15, 16, 17, 18) à une unité de commande (63) affecté à ladite substructure (11), dans lequel lesdits moyens transporteurs de l'énergie (38, 42, 49, 50) transfèrent l'énergie et lesdits moyens de transfert des informations (39, 40, 43, 44, 59, 60) transfèrent les informations par voie inductive et/ou capacitive via la même fente, et comprenant des moyens détecteurs supplémentaires (54) à détecter un état de transfert de l'énergie et à engendrer des informations de détection supplémentaire en fonction du transfert, auxdites informations de détection supplémentaires étant transférées en tant que des informations en retour à ladite unité de commande (63), **caractérisé en ce que** lesdites informations de détection supplémentaires sont transférées pour la correction des dérangements et défauts et/ou des échanges desdits moyens de transfert des informations (39, 40, 43, 44, 59, 60) en tant que des informations en retour à ladite unité de commande.

2. Dispositif selon la revendication 1, **caractérisé en ce qu'**une tête de transfert commune (22, 23, 28, 29, 68, 60) est disposée pour lesdits moyens transporteurs de l'énergie (38, 42, 49, 50) et lesdits moyens de transfert des informations (39, 40, 43, 44, 59, 60), à ladite tête de transfert (22, 23, 28, 29, 68, 60) renfermant, de préférence, un noyau (37, 41), sur lequel sont disposés une bobine de transfert de l'énergie et une bobine de transfert des informations (39, 40, 43, 44, 59, 60) aux orientations des champs magnétiques (45, 46, 47) différentes l'une de l'autre.

3. Dispositif selon la revendication 1 ou 2, **caractérisé en ce que** lesdits moyens détecteurs supplémentaires (54) sont affectés à ladite table (12) et détectent une tension transférée.

4. Dispositif selon une quelconque des revendications précédentes, **caractérisé en ce que** lesdits moyens détecteurs supplémentaires (64) sont affectés à ladite substructure (11) et détectent un courant ou une consommation d'énergie d'un dispositif d'alimentation (48) pour lesdits moyens transporteurs de l'énergie (38, 42, 49, 50).

5. Dispositif selon une quelconque des revendications précédentes, **caractérisé en ce que** lesdits moyens détecteurs supplémentaires détectent la température d'un circuit électrique affecté à ladite table (12) ou ladite substructure (11).

6. Dispositif selon une quelconque des revendications précédentes, **caractérisé en ce qu'**une unité d'alimentation d'énergie (48) pour lesdits composants (16, 17, 18, 21, 54), disposée à ladite table (12), est réglée par commande d'une fréquence de la tension alimentée auxdits moyens transporteurs de l'énergie (38, 42, 49, 50), en particulier par modulation par impulsions de largeur variable.

7. Dispositif selon une quelconque des revendications précédentes, **caractérisé en ce que** ledit transfert des informations se fait sous forme numérique, en particulier sous forme binaire, **en ce que** le code de fréquence des valeurs numériques et/ou valeurs binaires est réalisé en particulier, à l'affectation de fréquence étant sélectionnable, en particulier au moyen des cavaliers, et/ou **en ce que** des moyens démodulateurs (50, 61) sont montés pour le décodage, en particulier au moyen de la détection des phases, des informations transférées, ces moyens renfermant des composants logiques pour le décodage.

8. Dispositif selon une quelconque des revendications précédentes, **caractérisé par** des moyens de transfert des informations (39, 40, 43, 44, 59, 60) bidirectionnels.

9. Dispositif selon une quelconque des revendications précédentes, **caractérisé par** une tête de transfert (22, 23, 28, 29, 68, 69) pour le couplage radial ou axial.

10. Dispositif selon une quelconque des revendications précédentes, **caractérisé par** un support (13) apte à être attaché à ladite table (12) pour la réception de ladite pièce d'oeuvre (14), auxdits moyens détecteurs (15, 16, 17, 18) et/ou lesdits composants (21), auxdits moyens transporteurs de l'énergie (38, 42, 49, 50) et/ou lesdits moyens de transfert des informations (39, 40, 43, 44, 59, 60) transférant l'énergie et/ou lesdites informations, également par voie inductive et/ou capacitive, entre ladite table (12) et ledit support (13).
